# EUROPÄISCHE PATENTSCHRIFT

(11) **EP 3 534 339 B1**
(45) Veröffentlichungstag und Bekanntmachung des Hinweises auf die Patenterteilung: **26.01.2022**
(21) Anmeldenummer: 18159673.5
(22) Anmeldetag: 02.03.2018
(51) Int. Cl.: G07C 3/00, G07C 7/00, H01M 50/216

(54) **EINRICHTUNG ZUR ERFASSUNG VON BETRIEBSDATEN EINES MOTORANGETRIEBENEN WERKZEUGS UND SYSTEM**
DEVICE FOR DETECTING OPERATING DATA OF A MOTORISED TOOL AND SYSTEM
DISPOSITIF DE DÉTECTION DE DONNÉES DE FONCTIONNEMENT D'UN OUTIL MOTORISÉ ET SYSTÈME

(43) Veröffentlichungstag der Anmeldung: 04.09.2019
(73) Patentinhaber: Andreas Stihl AG & Co. KG, 71336 Waiblingen (DE)
(72) Erfinder: Gurr, Kay-Steffen, 74078 Heilbronn (DE); Vaas, André, 73489 Jagstzell (DE); Gindele, Cornelius, 73297 Plochingen (DE); Hilt, Thomas, 71364 Winnenden (DE); Menzel, Johannes, 73249 Wernau/Neckar (DE); Fries, Uwe, 70184 Stuttgart (DE)
(74) Vertreter: Patentanwälte Ruff, Wilhelm, Beier, Dauster & Partner mbB

(56) Entgegenhaltungen:
- WO-A1-2017/143767
- WO-A2-01/29783
- CN-U- 205 863 262
- US-A- 5 262 232
- US-A- 5 691 037
- US-A1- 2013 022 845
- US-A1- 2014 070 924
- US-B1- 6 297 742
- Bill Stockwell: "Poron Foam Battery Compartment Pad / Battery Cushion", The Elastomerics Blog by Stockwell Elastomerics , 1. Dezember 2011 (2011-12-01), XP002783736, Gefunden im Internet: URL:http://elastomerics-blog.stockwell.com /2011/12/poron-foam-battery-compartment-pa d.html [gefunden am 2018-08-08]

## Beschreibung

### ANWENDUNGSGEBIET UND STAND DER TECHNIK

Die Erfindung betrifft eine Einrichtung zur Erfassung von Betriebsdaten eines motorangetriebenen Werkzeugs und ein System mit einer solchen Einrichtung und einem motorangetriebenen Werkzeug.

Die WO 01/29783 A2 offenbart ein Datenaufzeichnungsgerät inklusive einer unabhängigen Überwachungseinrichtung ausgebildet zur Befestigung an einer Maschine um einen oder mehrere Parameter eines Betriebs der Maschine zu überwachen.

Des Weiteren offenbart die US 6,297,742 B1 eine unabhängige Überwachungseinrichtung angeordnet an einer Maschine oder nahe einer Maschine zum Bestimmen eines Gesundheits- und Betriebsstatus der Maschine.

Außerdem offenbart die US 2014/0070924 A1 ein System zum Identifizieren eines Typs eines angetriebenen Werkzeugs, wobei das System aufweist: ein angetriebenes Werkzeug mit einem elektrischen Motor; und eine Benutzungsanordnung ausgebildet zum Koppeln mit dem angetriebenen Werkzeug, die Benutzungsanordnung aufweisend einen Vibrationssensor, der Vibrationsdaten generiert, wenn das angetriebene Werkzeug vibriert, einen Speicher, der die Vibrationsdaten generiert durch den Vibrationssensor speichert, und ein Identifikationssubsystem, das die Vibrationsdaten von dem Speicher empfängt, und den Typ des angetriebenen Werkzeugs durch Vergleichen der empfangenen Vibrationsdaten mit vorbestimmten Vibrationsdaten eines bekannten Typs eines angetriebenen Werkzeugs identifiziert.

Weiter offenbart die US 2013/0022845 A1 ein Batteriemodul, wobei mikrozellulare Polyurethanpads zwischen Wänden des Batteriemoduls und internen Komponenten des Batteriemoduls zur reduzierten Degradation positioniert sind, die durch Betreiben des Batteriemoduls in einem Fahrzeug verursacht sein kann.

Zudem offenbart ein Post von Bill Stockwell in *"The Elastomerics Blog by Stockwell Elastomerics"* Schaumstoffbatteriefachpads.

Des Weiteren offenbart die CN 205863262 U eine Backupbatterie aufweisend ein Batteriegehäuse aufweisend eine Basis und einen oberen Deckel und eine Batterie lokalisiert zwischen der Basis und einem Schaumstoff des oberen Deckels.

Außerdem offenbart die WO 2017/143767 A1 ein portables elektronisches Gerät aufweisend eine Batterie aufgenommen in einer Kavität und benutzt zur Leistungsversorgung multipler elektronischer Komponenten und ein Dämpfungsteil in der Kavität, wobei ein Material des Dämpfungsteils ein flexibles Material ist.

Weiter offenbart die US 5,262,232 A eine vibrationsdämpfende Konstruktion benutzend acrylatenthaltende Dämpfungsmaterialien.

Zudem offenbart die US 5,691,037 A dämpfende Laminate mit verbesserter Verschlusskraft zur Rückhaltung.

### AUFGABE UND LÖSUNG

Der Erfindung liegt als Aufgabe die Bereitstellung einer Einrichtung zur Erfassung von Betriebsdaten eines motorangetriebenen Werkzeugs, die zuverlässig ist, und eines Systems mit einer solchen Einrichtung und einem motorangetriebenen Werkzeug zugrunde.

Die Erfindung löst diese Aufgabe durch die Bereitstellung einer Einrichtung mit den Merkmalen des Anspruchs 1 und eines Systems mit den Merkmalen des Anspruchs 14. Vorteilhafte Weiterbildungen und/oder Ausgestaltungen der Erfindung sind in den abhängigen Ansprüchen beschrieben.

Die erfindungsgemäße Einrichtung zur Erfassung von Betriebsdaten eines motorangetriebenen Werkzeugs ist zur Anordnung an, insbesondere in, dem Werkzeug ausgebildet. Die Einrichtung weist eine Erfassungs- und/oder Auswerteeinrichtung, einen Betriebsdatenspeicher, eine Kommunikationsschnittstelle, ein Gehäuse und mindestens ein elastisches Element auf. Die Erfassungs- und/oder Auswerteeinrichtung ist dazu ausgebildet, mindestens eine, insbesondere physikalische, Größe zu erfassen, wobei die Größe von einem Betriebszustand des Werkzeugs abhängig ist, und die erfasste Größe zur Ermittlung der Betriebsdaten auszuwerten, insbesondere automatisch. Zusätzlich oder alternativ ist die Erfassungs- und/oder Auswerteeinrichtung dazu ausgebildet, Betriebsdaten zu erfassen, insbesondere automatisch.

Der Betriebsdatenspeicher ist dazu ausgebildet, die ermittelten und/oder erfassten Betriebsdaten zu speichern, insbesondere automatisch. Die Kommunikationsschnittstelle ist dazu ausgebildet, die, insbesondere im Betriebsdatenspeicher, gespeicherten Betriebsdaten drahtlos zu einem Endgerät zu übertragen beziehungsweise zu senden, insbesondere automatisch. Das Gehäuse ist zur Aufnahme eines elektrischen Energiespeichers zur, insbesondere unterbrechungsfreien, Versorgung der Erfassungs- und/oder Auswerteeinrichtung, des Betriebsdatenspeichers und/oder der Kommunikationsschnittstelle mit elektrischer Energie ausgebildet. Des Weiteren weist das Gehäuse einen offenen Zustand und einen geschlossenen Zustand auf. Im offenen Zustand des Gehäuses ist der elektrische Energiespeicher entlang einer Einsetz- und Entnahmerichtung in das Gehäuse hinein einsetzbar oder aus dem Gehäuse heraus entnehmbar, insbesondere durch einen Benutzer. Das mindestens eine elastische Element ist dazu ausgebildet, im geschlossenen Zustand des Gehäuses den aufgenommenen elektrischen Energiespeicher durch Druckbeaufschlagung mit einer Kraft entlang der Einsetz- und Entnahmerichtung, insbesondere in beziehungsweise gegenüber dem Gehäuse, zu fixieren beziehungsweise zu halten, insbesondere durch direkten Kontakt. Die Kraft weist einen Wert von der Masse des elektrischen Energiespeichers multipliziert mit minimal 1 Newton (N) pro Gramm (g) auf, insbesondere minimal 2,5 N/g, insbesondere minimal 5 N/g, insbesondere minimal 10 N/g, insbesondere minimal 15 N/g, insbesondere minimal 20 N/g, insbesondere minimal 25 N/g, insbesondere minimal 30 N/g.

Die Einrichtung beziehungsweise ihr Erfassungs- und/oder Auswerteeinrichtung, ihr Betriebsdatenspeicher und ihre Kommunikationsschnittstelle ermöglichen die Betriebsdaten zu erfassen und zu übertragen.

Des Weiteren ermöglicht die Einrichtung beziehungsweise ihr Gehäuse im offenen Zustand, insbesondere dem Benutzer, eine Auswechslung beziehungsweise einen Austausch des Energiespeichers, insbesondere falls der Energiespeicher leer ist.

Außerdem ermöglicht die Einrichtung beziehungsweise ihr elastisches Element, insbesondere im geschlossenen Zustand des Gehäuses, eine Sicherung des aufgenommenen Energiespeichers gegen Vibrationen beziehungsweise Schwingungen beziehungsweise Beschleunigungen und somit eine unterbrechungsfreie Versorgung mit elektrischer Energie, insbesondere während eines Betriebs des Werkzeugs. Somit ermöglicht das elastische Element eine schwingungsfeste beziehungsweise schwingungsbeständige Einrichtung.

Im Detail können im Betrieb des motorangetriebenen Werkzeugs relativ starke Vibrationen beziehungsweise Schwingungen beziehungsweise Beschleunigungen auftreten, insbesondere mit einem Wert von minimal der 100-fachen normalen Erdbeschleunigung (G = 9,80665 m/s²), insbesondere von minimal 250 G. Bei Anordnung der Einrichtung an dem Werkzeug können diese Beschleunigungen von dem Werkzeug auf die Einrichtung beziehungsweise ihr Gehäuse, insbesondere mechanisch, übertragen werden. Bisher konnte dies zu einer Bewegung des aufgenommenen Energiespeichers in dem Gehäuse, insbesondere aufgrund eines eventuellen Spiels entlang der Einsetz- und Entnahmerichtung zur Ermöglichung der Auswechslung, und somit zu einer Unterbrechung der Versorgung mit elektrischer Energie führen. Jetzt kann im geschlossenen Zustand des Gehäuses das erfindungsgemäße elastische Element den aufgenommenen Energiespeicher entlang der Einsetz- und Entnahmerichtung derart fixieren beziehungsweise erfindungsgemäß kann die Minimalkraft derart hoch gewählt sein, dass bei Beschleunigungen mit typischen Werten eine Bewegung des Energiespeichers entlang der Einsetz- und Entnahmerichtung vermieden werden kann. Anders formuliert: eine, insbesondere axiale, Andruckkraft kann größer als eine Beschleunigungskraft sein. Somit kann eine Unterbrechung der Versorgung mit elektrischer Energie vermieden werden.

In anderen Worten: das elastische Element kann dazu ausgebildet sein, im geschlossenen Zustand des Gehäuses durch den aufgenommenen Energiespeicher zur Fixierung des Energiespeichers mit der Kraft entlang der Einsetz- und Entnahmerichtung zusammengedrückt zu sein, insbesondere zum Ausgleich eines eventuellen Spiels.

Kurz: Kraft F ≥ Masse des elektrisches Energiespeichers m (in g) x 1 N/g. Die 1 N/g können als Untergrenze bezeichnet werden.

Zusätzlich kann eine Obergrenze vorgesehen sein. Insbesondere kann Wert der Kraft die Masse des elektrische Energiespeichers multipliziert mit maximal 60 N/g sein, insbesondere maximal 55 N/g, insbesondere maximal 50 N/g, insbesondere maximal 45 N/g, insbesondere maximal 40 N/g, insbesondere maximal 35 N/g, insbesondere maximal 30 N/g.

Kurz: Kraft F ≤ Masse des elektrisches Energiespeichers m (in g) x 60 N/g. Die 60 N/g können als Obergrenze bezeichnet werden.

Insbesondere kann die Einrichtung beziehungsweise ihr Gehäuse und ihr elastisches Element dazu ausgebildet sein, dass die Druckbeaufschlagung durch beziehungsweise beim Schließen des Gehäuses mit dem aufgenommenen Energiespeicher erzeugt werden beziehungsweise entstehen kann, insbesondere aufgebracht werden braucht.

Dies kann ermöglichen beziehungsweise die Maximalkraft kann derart niedrig gewählt sein, dass eine Schließung des Gehäuses mit dem aufgenommenen Energiespeicher, insbesondere gegen die Kraft, dem Benutzer ermöglicht sein kann.

Insbesondere kann das Gehäuse dazu ausgebildet sein, dass sein Zustand zwischen offen und geschlossen, insbesondere wiederholt und/oder zerstörungsfrei, veränderbar sein kann, insbesondere durch den Benutzer.

Im offenen Zustand des Gehäuses beziehungsweise ohne Energiespeicher kann eine Dicke des elastischen Elements entlang der Einsetz- und Entnahmerichtung einen Wert von minimal 1 Millimeter (mm) und/oder bis maximal 6 mm aufweisen, insbesondere von minimal 1,5 mm und/oder bis maximal 5 mm, insbesondere von minimal 2 mm und/oder bis maximal 4 mm, insbesondere 3 mm. Zusätzlich oder alternativ kann im geschlossenen Zustand des Gehäuses beziehungsweise mit Energiespeicher eine Dicke des elastischen Elements entlang der Einsetz- und Entnahmerichtung einen Wert von minimal 0,5 mm und/oder bis maximal 4 mm aufweisen, insbesondere von minimal 1 mm und/oder bis maximal 3 mm, insbesondere 2 mm. Anders formuliert: im geschlossenen Zustand des Gehäuses beziehungsweise mit Energiespeicher kann das elastische Element entlang der Einsetz- und Entnahmerichtung um einen Wert von minimal 0,5 mm und/oder bis maximal 2 mm zusammengedrückt sein, insbesondere 1 mm.

In anderen Worten: das elastische Element kann eine Federkonstante mit einem Wert von der Masse des elektrischen Energiespeichers multipliziert mit minimal 1 N/g* Millimeter (mm), insbesondere bis maximal 60 N/g * mm, aufweisen.

Insbesondere kann das elastische Element dazu ausgebildet sein, bei Wegfall der Kraft, insbesondere im offenen Zustand des Gehäuses beziehungsweise ohne Energiespeicher, in seine Ursprungsform zurückzukehren.

Das elastische Element kann als Puffer bezeichnet werden, insbesondere zum Ausgleich eines eventuellen Spiels. Zusätzlich oder alternativ kann das elastische Element von dem Gehäuse und/oder dem Energiespeicher verschieden sein. Weiter zusätzlich oder alternativ kann das elastische Element mindestens teilweise, insbesondere vollständig, im geschlossenen Zustand in dem beziehungsweise innerhalb des Gehäuses angeordnet sein.

Das Gehäuse kann starr sein beziehungsweise im Vergleich zum elastischen Element eine deutlich höhere Federkonstante aufweisen. Insbesondere kann das Gehäuse Kunststoff wie Polyamid, insbesondere PA6-GF30, aufweisen, insbesondere aus Kunststoff bestehen.

Die Einrichtung kann zur, insbesondere mechanischen, Kopplung mit beziehungsweise Anbringung beziehungsweise Befestigung an, insbesondere in, dem Werkzeug ausgebildet sein. Insbesondere kann die Einrichtung zur, insbesondere lösbaren, Verbindung mit dem Werkzeug ausgebildet sein, insbesondere durch eine stoffschlüssige Verbindung wie eine Verklebung, eine kraftschlüssige Verbindung wie eine Rast- beziehungsweise Schnappverbindung und/oder ein formschlüssige Verbindung wie eine Verschraubung. Die Einrichtung kann an, insbesondere in, dem Werkzeug angeordnet sein, insbesondere ein Teil des Werkzeugs sein. Zusätzlich oder alternativ kann die Einrichtung bei Anordnung an dem Werkzeug in direktem Kontakt mit dem Werkzeug, insbesondere einem Werkzeuggehäuse beziehungsweise einer Haube, des Werkzeugs sein. Weiter zusätzlich oder alternativ kann die Einsetz- und Entnahmerichtung bei Anordnung an dem Werkzeug, insbesondere an der Anordnungsstelle, nicht parallel, insbesondere senkrecht, zu einer Oberfläche des Werkzeugs sein.

Das Werkzeug kann einen Elektroantriebsmotor oder einen Verbrennungsantriebsmotor aufweist beziehungsweise mittels eines Elektromotors oder eines Verbrennungsmotors angetrieben sein.

Die Erfassungs- und/oder Auswerteeinrichtung kann dazu ausgebildet sein, die mindestens eine Größe und/oder die Betriebsdaten drahtlos zu erfassen, insbesondere ohne eine galvanische Verbindung mit dem Werkzeug beziehungsweise Komponenten des Werkzeugs aufzuweisen.

Insbesondere kann die Erfassungs- und/oder Auswerteeinrichtung einen Sensor aufweisen, wobei der Sensor dazu ausgebildet sein kann, die mindestens eine Größe zu erfassen. Die Größe kann als Messgröße bezeichnet werden. Insbesondere kann der Sensor an, insbesondere in, dem Gehäuse der Einrichtung angeordnet sein. Zusätzlich oder alternativ kann der Sensor dazu ausgebildet sein, dass er dazu in der Lage sein kann, unabhängig davon, ob das Werkzeug mittels eines Elektromotors oder eines Verbrennungsmotors angetrieben sein kann, die Größe zu erfassen. Somit können Größen und damit auch Betriebsdaten für eine Vielzahl von Antriebstechnologien wie verbrennungsmotorgetrieben, kabelgebunden, Akkumulator-basiert mit derselben Einrichtung erfasst werden, ohne dass eine leitungsgebundene Verbindung mit dem Werkzeug beziehungsweise mit Komponenten des Werkzeugs erforderlich sein braucht. Insbesondere kann der Sensor ein induktiver Sensor sein, wie mindestens eine Spule. Mittels des induktiven Sensors kann es möglich sein, insbesondere im Betrieb des Werkzeugs, sich ändernde elektromagnetische und/oder magnetische Felder zu detektieren, insbesondere verursacht durch Streufelder von Elektromotoren, Zündimpulse von Verbrennungsmotoren, Stromänderungen, sich bewegende Magnete in einem Schwungrad des Werkzeugs, eines Generators, etc. Insoweit sei auch auf die einschlägige Fachliteratur verwiesen.

Zusätzlich oder alternativ kann die Erfassungs- und/oder Auswerteeinrichtung einen Microcontroller aufweisen oder sein.

Weiter zusätzlich oder alternativ können die Betriebsdaten eine Betriebsdauer des Werkzeugs sein, insbesondere während welcher der Elektromotor, soweit vorhanden, oder der Verbrennungsmotor, soweit vorhanden, aktiv sein kann. Es versteht sich, dass es sich bei den Betriebsdaten neben den Betriebsstunden auch um weitere werkzeugbetriebsrelevante Daten handeln kann wie um Antriebstemperaturen, Antriebsleistungen, Lastdaten, werkzeugbenutzerbezogene Daten, Ladezustände und/oder Spannungszustände eines Energiespeichers, Einsatzorte, usw. Insoweit sei auch auf die einschlägige Fachliteratur verwiesen.

Der Betriebsdatenspeicher kann ein flüchtiger Speicher wie ein RAM (Random Access Memory) und/oder einen nicht-flüchtigen Speicher wie einen FLASH-Speicher aufweisen oder sein. Insbesondere bei Verwendung eines nicht-flüchtigen Speichers können redundante Speicherverfahren eingesetzt werden. Insoweit sei auch auf die einschlägige Fachliteratur verwiesen.

Die Kommunikationsschnittstelle kann eine WLAN-Schnittstelle und/oder eine Bluetooth-Schnittstelle aufweisen oder sein. Zusätzlich oder alternativ kann die Kommunikationsschnittstelle dazu ausgebildet sein, zu übertragen, unabhängig davon, ob sich ein Endgerät in Reichweite befindet oder nicht. Insoweit sei auch auf die einschlägige Fachliteratur verwiesen.

Das Endgerät kann beispielsweise basierend auf den empfangenen Betriebsdaten Auswertungen der Betriebsdaten vornehmen und diese dem Benutzer optisch aufbereitet darstellen.

Die Versorgung mit elektrischer Energie kann als elektrische Energieversorgung bezeichnet werden. Insbesondere kann die Einrichtung elektrische Kontaktelemente aufweisen, wobei die Kontaktelemente dazu ausgebildet sein können, im geschlossenen Zustand des Gehäuses korrespondierende elektrische Kontakte des aufgenommenen Energiespeichers elektrisch zu kontaktieren.

Insbesondere kann die Einrichtung eine Spannungsüberwachung für ein definiertes Verhalten aufweisen, falls es doch einmal zu Spannungseinbrüchen beziehungsweise einer Versorgungsunterbrechung kommen sollte. Insbesondere kann die Spannungsüberwachung eine Brownout-Detection aufweisen oder sein. Insoweit sei auch auf die einschlägige Fachliteratur verwiesen.

Die Einrichtung kann als elektrische Einrichtung bezeichnet werden.

In einer Weiterbildung der Erfindung weist die Einrichtung einen elektrischen Energiespeicher auf. Insbesondere kann der Energiespeicher ein elektrochemischer Energiespeicher sein, insbesondere eine Batterie. Zusätzlich oder alternativ kann eine Gesamthöhe des Energiespeichers entlang der Einsetz- und Entnahmerichtung, insbesondere bei Aufnahme im Gehäuse, kleiner als ein Gesamtdurchmesser des Energiespeichers radial beziehungsweise senkrecht zu der Einsetz- und Entnahmerichtung sein. Anders formuliert: der Energiespeicher kann eine Knopfzelle sein. Insbesondere kann der Energiespeicher eine CR 2032-Knopfzelle, insbesondere mit einer Masse von 3 g, oder eine CR 2450-Knopfzelle sein, insbesondere mit einer Masse von 6 g.

In einer Weiterbildung der Erfindung weist die Kraft einen Wert von minimal 3 N auf, insbesondere von minimal 7,5 N, insbesondere von minimal 15 N, insbesondere von minimal 30 N, insbesondere von minimal 45 N, insbesondere von minimal 60 N, insbesondere von minimal 75 N, insbesondere von minimal 90 N. Insbesondere kann dieses Merkmal im unabhängigen Anspruch 1 das Merkmal, wobei die Kraft einen Wert von der Masse des Energiespeichers multipliziert mit minimal 1 N/g aufweist, ersetzen. Zusätzlich kann die Kraft einen Wert von maximal von maximal 180 N aufweisen, insbesondere von maximal 165 N, insbesondere von maximal 150 N, insbesondere von maximal 135 N, insbesondere von maximal 120 N, insbesondere von maximal 105 N, insbesondere von maximal 90 N. In anderen Worten: das elastische Element kann eine Federkonstante mit einem Wert von minimal 3 N/mm bis maximal 180 N/mm aufweisen.

In einer Weiterbildung der Erfindung ist das elastische Element dazu ausgebildet, im geschlossenen Zustand des Gehäuses den aufgenommenen elektrischen Energiespeicher mittels eines Flächenkontakts zu fixieren. Dies ermöglicht eine flächige Übertragung der Kraft zwischen dem elastischen Element und dem Energiespeicher und/oder einen Ausgleich von Unebenheiten. Insbesondere kann Flächenkontakt bedeuten, dass nicht nur an einem Rand beziehungsweise Ring, insbesondere des elastisches Elements oder des Energiespeichers, sondern auch in einem Großteil einer Fläche dazwischen kontaktiert werden kann, insbesondere mindestens 50 Prozent (%) der Fläche, insbesondere mindestens 60 %, insbesondere 70 %, insbesondere 80 %, insbesondere 90 %, insbesondere 100 %. Eine Fläche und/oder ein Durchmesser des elastischen Elements können/kann einer Fläche und/oder einem Durchmesser des Energiespeichers entsprechen. Insbesondere kann das elastische Element flächig ausgebildet sein. Zusätzlich oder alternativ kann das elastische Element eine Zylinderform aufweisen, insbesondere mit einer kreisrunden Querschnittsform.

In einer Weiterbildung der Erfindung weist das elastische Element einen Schaumstoff auf, insbesondere ist das elastische Element, insbesondere vollständig, ein Schaumstoff. Dies ermöglicht einen, insbesondere den, Flächenkontakt und/oder eine, insbesondere die, flächige Ausbildung und/oder eine relativ geringe Bauhöhe der Einrichtung beziehungsweise seines Gehäuses und/oder eine relativ kostengünstige Herstellung des elastischen Elements und somit der Einrichtung. Insbesondere kann unter dem Schaumstoff ein künstlich hergestellter Stoff mit zelliger Struktur und niedriger Dichte verstanden werden, den man zusammendrücken kann, insbesondere durch Druck sein Volumen deutlich verkleinern kann. In anderen Worten: das elastische Element kann ein zelliges Elastomer sein.

In einer Weiterbildung der Erfindung weist das elastische Element Polyurethane auf, insbesondere besteht das elastische Element, insbesondere vollständig, aus Polyurethane. Dies ermöglicht eine Dauerelastizität des elastischen Elements. Insbesondere kann das Gehäuse ein davon verschiedenes Material aufweisen, insbesondere aus einem davon verschiedenen Material bestehen.

In einer Weiterbildung der Erfindung ist das Gehäuse dazu ausgebildet beziehungsweise geformt, im geschlossenen Zustand des Gehäuses den aufgenommenen elektrischen Energiespeicher radial beziehungsweise senkrecht zur Einsetz- und Entnahmerichtung zu sichern, insbesondere gegen Bewegung. In anderen Worten: das Gehäuse kann dazu ausgebildet sein, im geschlossenen Zustand den aufgenommenen Energiespeicher radial zur Einsetz- und Entnahmerichtung zu fixieren beziehungsweise zu halten. Das Gehäuse kann als radiale Führung beziehungsweise Begrenzung bezeichnet werden. Insbesondere kann das Gehäuse, insbesondere Innen, um die Einsetz- und Entnahmerichtung herum rotationssymmetrisch geformt sein. Ein Spiel radial zur Einsetz- und Entnahmerichtung braucht nicht erforderlich zu sein.

In einer Weiterbildung der Erfindung weist das Gehäuse einen Behälter zur Aufnahme des elektrischen Energiespeichers und einen, insbesondere auf den Behälter aufsetzbaren, Deckel zum Verschluss des Behälters auf. Im offenen Zustand des Gehäuses ist der Deckel von dem Behälter entfernt. Im geschlossen Zustand des Gehäuses verschließt der Deckel den Behälter, insbesondere fluiddicht. Des Weiteren ist im geschlossenen Zustand des Gehäuses das elastische Element an dem Deckel derart angeordnet, dass das elastische Element den aufgenommenen elektrischen Energiespeicher gegen den Behälter druckbeaufschlägt. In anderen Worten: im geschlossenen Zustand des Gehäuses kann das elastische Element zwischen dem Deckel und dem aufgenommenen Energiespeicher angeordnet sein, insbesondere entlang der Einsetz- und Entnahmerichtung. Insbesondere kann das elastische Element mit dem Deckel verbunden sein, insbesondere stoffschlüssig. Der Behälter kann als Wanne bezeichnet werden. Insbesondere kann der Behälter von dem Deckel verschieden sein. Im geschlossenen Zustand kann der Deckel mit dem Behälter, insbesondere mechanisch, verbunden sein.

In einer Ausgestaltung der Erfindung weisen der Behälter und der Deckel mindestens einen Bajonettverschluss zur mechanischen Verbindung miteinander auf, insbesondere im geschlossenen Zustand des Gehäuses. Dies ermöglicht eine relativ geringe Bauhöhe der Einrichtung beziehungsweise seines Gehäuses und/oder dem Benutzer, das Gehäuse relativ einfach zu schließen.

In einer Weiterbildung der Erfindung ist die Einrichtung getrennt von dem Werkzeug ausgebildet. Dies ermöglicht eine Nachrüstung der Einrichtung an dem Werkzeug. Insbesondere kann die Einrichtung als Gerät bezeichnet werden.

In einer Weiterbildung der Erfindung weist die Einrichtung ein dämpfendes Element auf. Bei Anordnung der Einrichtung an dem Werkzeug, insbesondere einem Werkzeuggehäuse, ist das dämpfende Element zwischen dem Gehäuse und dem Werkzeug, insbesondere dem Werkzeuggehäuse, angeordnet. Dies ermöglicht eine mechanische Entkopplung des Gehäuses von dem Werkzeug, insbesondere eine Übertragung von Vibrationen beziehungsweise Beschleunigungen von dem Werkzeug auf das Gehäuse und somit auf den aufgenommenen Energiespeicher zu verringern. Insbesondere kann eine Dicke des dämpfenden Elements entlang der Einsetz- und Entnahmerichtung einen Wert von minimal 0,1 mm und/oder bis maximal 6 mm sein, insbesondere von minimal 0,5 mm und/oder bis maximal 3 mm, insbesondere 1,5 mm. Zusätzlich oder alternativ kann das dämpfende Element von dem Gehäuse und/oder dem Werkzeug und/oder dem elastischen Element verschieden sein. Das dämpfende Element und das Gehäuse und/oder das dämpfende Element und das Werkzeug können, insbesondere jeweils, einen Flächenkontakt miteinander aufweisen beziehungsweise das dämpfende Element kann flächig ausgebildet sein. Weiter zusätzlich oder alternativ kann das dämpfende Element einen Schaumstoff aufweisen, insbesondere ein Schaumstoff sein. Weiter zusätzlich oder alternativ kann das elastische Element mit dem Gehäuse verbunden sein, insbesondere stoffschlüssig. Zusätzlich kann bei Anordnung das dämpfende Element mit dem Werkzeug verbunden sein, insbesondere stoffschlüssig. Insbesondere kann das dämpfende Element als doppelseitiges Klebeband ausgebildet sein.

In einer Ausgestaltung der Erfindung weist das dämpfende Element Acrylat auf, insbesondere besteht das dämpfende Element, insbesondere vollständig, aus Acrylat. Dies ermöglicht eine besonders gute Dämpfung beziehungsweise Entkopplung. Zusätzlich kann Acrylat eine stoffschlüssige Verbindung, insbesondere eine Verklebung, mit dem Gehäuse und/oder dem Werkzeug ermöglichen. Insbesondere kann das Gehäuse ein davon verschiedenes Material aufweisen, insbesondere aus einem davon verschiedenen Material bestehen.

In einer Weiterbildung der Erfindung weist die Einrichtung federnde elektrische Kontaktelemente auf. Die federnden elektrischen Kontaktelemente sind dazu ausgebildet, im geschlossenen Zustand des Gehäuses korrespondierende elektrische Kontakte, insbesondere Kontaktflächen, des aufgenommenen elektrischen Energiespeichers elektrisch zu kontaktieren. Das elastische Element ist von den federnden elektrischen Kontaktelementen verschieden. Dies ermöglicht eine Trennung beziehungsweise Entkopplung von, insbesondere mechanischer, Fixierung und elektrischer Kontaktierung des Energiespeichers und somit können das elastische Element und die Kontaktelemente jeweils für seine/ihre Aufgabe beziehungsweise Funktion optimiert sein. Anders formuliert: die Kontaktelemente brauchen zur Fixierung nicht beizutragen. In anderen Worten: das Gehäuse und das elastische Element können derart korrespondierend zum Energiespeicher geformt sein, dass der Energiespeicher im geschlossenen Zustand des Gehäuses mittels des Gehäuses und des elastischen Elements in Position gehalten sein kann und nicht mittels der Kontaktelemente in Position gehalten sein braucht. Insbesondere können die federnden Kontaktelemente im geschlossenen Zustand des Gehäuses aufgrund ihrer Federspannung gegen die korrespondierenden Kontakte beziehungsweise Kontaktflächen gedrückt werden, um eine elektrische Kontaktierung mit geringem Übergangswiderstand bewirken zu können. Die Federspannung braucht hierbei jedoch lediglich zur optimalen elektrischen Kontaktierung, nicht jedoch zur Fixierung des Energiespeichers im Gehäuse zu dienen. Mit anderen Worten können das Gehäuse und das elastische Element aufgrund ihrer Formgebung die Funktion der Fixierung des Energiespeichers und die federnden Kontaktelemente die Funktion der elektrischen Kontaktierung übernehmen. Zusätzlich oder alternativ können die Kontaktelemente aus dem Gehäuse herausgeführt sein, um dort elektrisch mit korrespondierenden Anschlüssen, insbesondere auf einer Platine, verbunden zu sein.

Die oben beschriebene Einrichtung mit allen ihren oder einem Teil ihrer Eigenschaften kann dazu vorgesehen sein, mit dem motorangetriebenen Werkzeug, insbesondere das mittels eines Elektromotors und/oder mittels eines Verbrennungsmotors angetrieben sein kann, zur Erfassung von Betriebsdaten des Werkzeugs verwendet werden zu können. In anderen Worten: Verwendung der Einrichtung zur Erfassung von Betriebsdaten des motorangetriebenen Werkzeugs, insbesondere das mittels eines Elektromotors und/oder mittels eines Verbrennungsmotors angetrieben sein kann.

Das erfindungsgemäße System weist eine oben beschriebene Einrichtung und ein motorangetriebenes Werkzeug auf. Insbesondere kann das Werkzeug teilweise oder ganz wie oben beschrieben ausgebildet sein. Zusätzlich oder alternativ kann das Werkzeug als handgeführtes, insbesondere handgetragenes oder bodengeführtes, Werkzeug ausgebildet sein. Handgeführtes, insbesondere handgetragenes, Werkzeug kann bedeuten, dass das Werkzeug eine maximale Masse von 50 Kilogramm (kg), insbesondere von 20 kg, insbesondere von 10 kg, aufweisen kann. Weiter zusätzlich oder alternativ kann das Werkzeug ein Garten- und/oder Forstbearbeitungswerkzeug oder Bodenbearbeitungswerkzeug sein.

In einer Weiterbildung der Erfindung ist das motorangetriebene Werkzeug eine Säge, oder ein Hoch-Entaster, oder eine Heckenschere, oder ein Heckenschneider, oder ein Laubbläser, oder ein Laubsauger, oder eine Kehrwalze, oder eine Kehrbürste, oder ein Rasenmäher, oder ein Freischneider, oder ein Vertikutierer.

Zusätzlich oder alternativ zu dem motorangetriebenen Werkzeug kann das System ein Endgerät aufweisen. Insbesondere kann das Endgerät eine beliebige datenverarbeitende Einrichtung sein, die eine geeignete drahtlose Schnittstelle aufweisen kann, die zur drahtlosen Kommunikation mit der Kommunikationsschnittstelle der Einrichtung zur Erfassung von Betriebsdaten ausgebildet sein kann. Zusätzlich oder alternativ kann das Endgerät ein Gateway bilden beziehungsweise sein, das die empfangenen Betriebsdaten an einen Server weiterleiten kann wie an einen sogenannten Cloud-Speicher, der die Betriebsdaten speichern kann. Die im Cloud-Speicher gespeicherten Betriebsdaten können dann mittels eines geeigneten Tools wie eines Web-Browsers betrachtet und ausgewertet werden. Insbesondere kann das Endgerät ein mobiles Endgerät wie ein Laptop, ein Tablet oder ein Smartphone sein. Mobil kann als portabel oder handgeführt, insbesondere handgetragen, bezeichnet werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Explosionsansicht einer erfindungsgemäßen Einrichtung eines erfindungsgemäßen Systems,
- Fig. 2: eine schematische Längsschnittansicht der Einrichtung der Fig. 1,
- Fig. 3: eine schematische Perspektivansicht eines Abschnitts eines motorangetriebenen Werkzeugs des Systems, und
- Fig. 4: ein schematisches Blockschaltbild des Systems mit der Einrichtung der Fig. 1 und dem Werkzeug der Fig. 3.

### DETAILLIERTE BESCHREIBUNG DER AUSFÜHRUNGSBEISPIELE

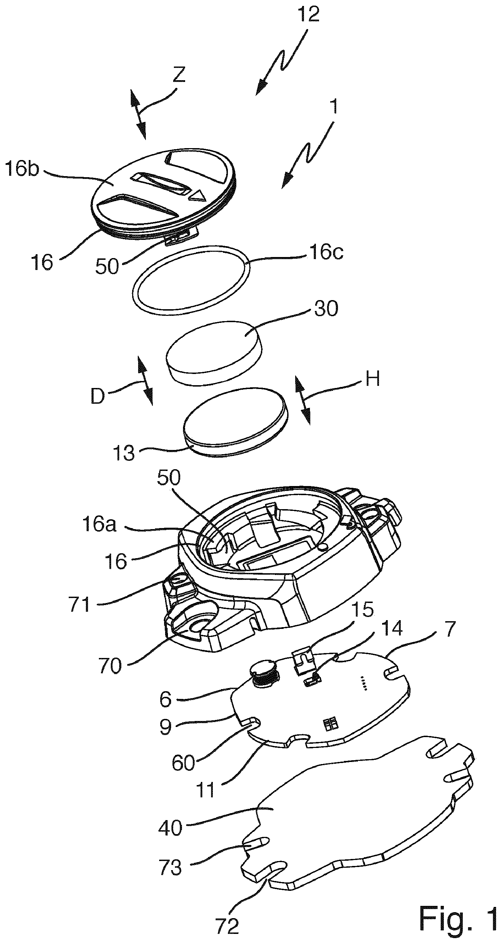

Fig. 1 bis 4 zeigen ein erfindungsgemäßes System 12. Das System 12 weist eine Einrichtung 1 und ein motorangetriebenes Werkzeug 2 auf.

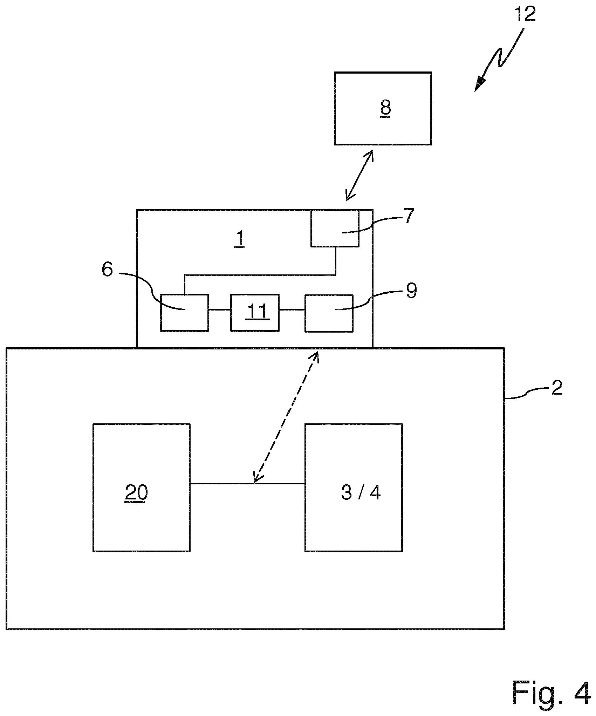

Im Detail weist das Werkzeug 2 einen Elektroantriebsmotor 3 oder einen Verbrennungsantriebsmotor 4 auf, wie in Fig. 4 gezeigt.

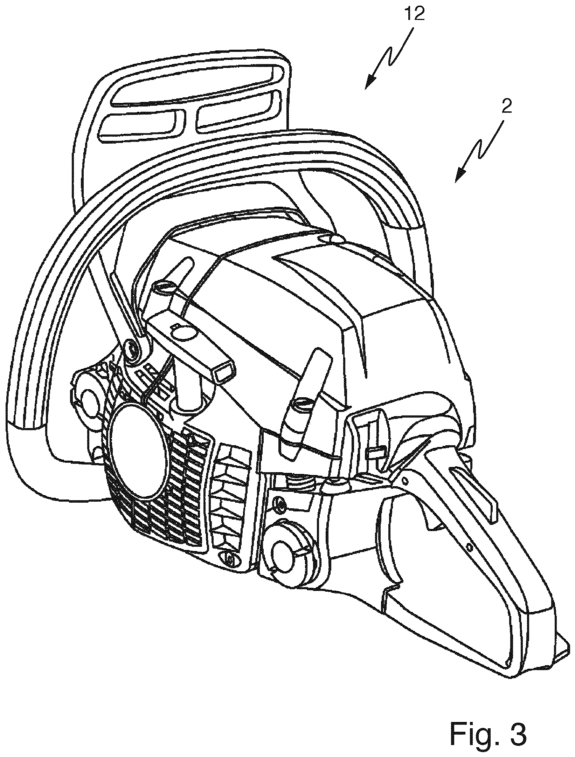

Im gezeigten Ausführungsbeispiel ist das motorangetriebene Werkzeug 2 eine Säge, wie in Fig. 3 zu erkennen. Im Detail weist das Werkzeug 2 eine Sägekette 20 auf, wobei insbesondere der Elektroantriebsmotor 3 oder der Verbrennungsantriebsmotor 4 zum Antrieb der Sägekette 20 ausgebildet ist. In alternativen Ausführungsbeispielen kann das Werkzeug ein Hoch-Entaster, oder eine Heckenschere, oder ein Heckenschneider, oder ein Laubbläser, oder ein Laubsauger, oder eine Kehrwalze, oder eine Kehrbürste, oder ein Rasenmäher, oder ein Freischneider, oder ein Vertikutierer sein.

Zusätzlich weist das System 12 ein Endgerät 8 auf.

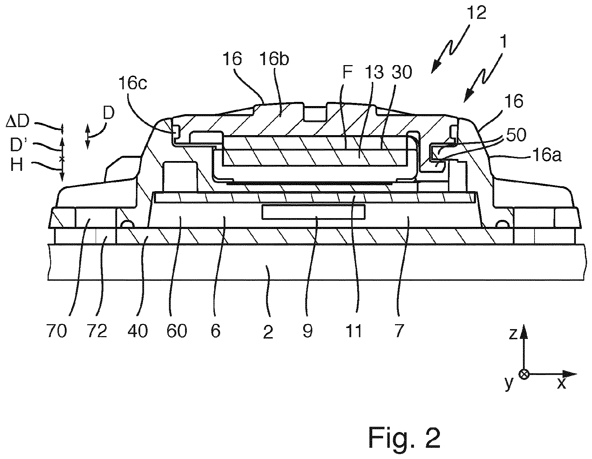

Die erfindungsgemäße Einrichtung 1 ist zur Erfassung von Betriebsdaten des motorangetriebenen Werkzeugs 2 ausgebildet. Des Weiteren ist die Einrichtung 1 zur Anordnung an dem Werkzeug 2 ausgebildet. Außerdem weist die Einrichtung 1 eine Erfassungs- und/oder Auswerteeinrichtung 9, 11, einen Betriebsdatenspeicher 6, eine Kommunikationsschnittstelle 7, ein Gehäuse 16 und mindestens ein elastisches Element 30 auf, wie in Fig. 1 und 2 gezeigt. Die Erfassungs- und/oder Auswerteeinrichtung 9, 11 ist dazu ausgebildet, mindestens eine Größe zu erfassen, wobei die Größe von einem Betriebszustand des Werkzeugs 2 abhängig ist, und die erfasste Größe zur Ermittlung der Betriebsdaten auszuwerten. Zusätzlich oder alternativ ist die Erfassungs- und/oder Auswerteeinrichtung 9, 11 dazu ausgebildet, Betriebsdaten zu erfassen. Der Betriebsdatenspeicher 6 ist dazu ausgebildet, die ermittelten und/oder erfassten Betriebsdaten zu speichern. Die Kommunikationsschnittstelle 7 ist dazu ausgebildet, die gespeicherten Betriebsdaten drahtlos zu dem Endgerät 8 zu übertragen. Das Gehäuse 16 ist zur Aufnahme eines elektrischen Energiespeichers 13 zur Versorgung der Erfassungs- und/oder Auswerteeinrichtung 9, 11, des Betriebsdatenspeichers 6 und/oder der Kommunikationsschnittstelle 7 mit elektrischer Energie ausgebildet. Des Weiteren weist das Gehäuse 16 einen offenen Zustand und einen geschlossenen Zustand auf. Im offenen Zustand des Gehäuses 16 ist der elektrische Energiespeicher 13 entlang einer Einsetz- und Entnahmerichtung z in das Gehäuse 16 hinein einsetzbar oder aus dem Gehäuse 16 heraus entnehmbar. Das mindestens eine elastische Element 30 ist dazu ausgebildet ist, im geschlossenen Zustand des Gehäuses 16 den aufgenommenen elektrischen Energiespeicher 13 durch Druckbeaufschlagung mit einer Kraft F entlang der Einsetz- und Entnahmerichtung z zu fixieren. Die Kraft F weist einen Wert von der Masse m des elektrischen Energiespeichers 13 multipliziert mit minimal 1 N/g, und insbesondere maximal 60 N/g, auf.

Im gezeigten Ausführungsbeispiel weist die Erfassungs- und/oder Auswerteeinrichtung 9, 11 einen Erfassungsteil 9 in Form eines Sensors und einen Auswerteteil 11 in Form eines Microcontrollers auf, wobei der Erfassungsteil 9 und der Auswerteteil 11 eine Wirkbeziehungsweise Signalverbindung miteinander aufweisen. In alternativen Ausführungsbeispielen kann die Erfassungs- und/oder Auswerteeinrichtung anders ausgebildet sein.

Des Weiteren weist im gezeigten Ausführungsbeispiel die Einrichtung 1 nur ein einziges elastisches Element 30 auf.

Im Detail weist die Einrichtung 1 den elektrischen Energiespeicher 13 auf. Im gezeigten Ausführungsbeispiel ist der Energiespeicher 13 eine CR 2032-Knopfzelle, insbesondere mit einer Gesamthöhe H entlang der Einsetz- und Entnahmerichtung z von 3,2 mm. In alternativen Ausführungsbeispielen kann der Energiespeicher eine CR 2450-Knopfzelle sein, insbesondere mit einer Gesamthöhe entlang der Einsetz- und Entnahmerichtung von 5,0 mm.

Im gezeigten Ausführungsbeispiel weist die Kraft F einen Wert von 90 N auf. In alternativen Ausführungsbeispielen kann die Kraft einen Wert von minimal 3 N, und insbesondere von maximal 180 N, aufweisen.

Das elastische Element 30 ist dazu ausgebildet, im geschlossenen Zustand des Gehäuses 16 den aufgenommenen elektrischen Energiespeicher 13 mittels eines Flächenkontakts zu fixieren.

Des Weiteren weist das elastische Element 30 einen Schaumstoff auf, insbesondere ist das elastische Element 30 ein Schaumstoff.

Außerdem weist das elastische Element 30 Polyurethane auf, insbesondere besteht das elastische Element 30 aus Polyurethane.

Das Gehäuse 16 ist dazu ausgebildet, im geschlossenen Zustand des Gehäuses 16 den aufgenommenen elektrischen Energiespeicher 13 radial zur Einsetz- und Entnahmerichtung z, insbesondere in Richtungen x, y, zu sichern. Insbesondere ist das Gehäuse, insbesondere Innen, um die Einsetz- und Entnahmerichtung z herum rotationssymmetrisch geformt.

Des Weiteren weist das Gehäuse 16 einen Behälter 16a zur Aufnahme des elektrischen Energiespeichers 13 und einen Deckel 16b zum Verschluss des Behälters 16a auf. Im offenen Zustand des Gehäuses 16 ist der Deckel 16b von dem Behälter 16a entfernt. Im geschlossen Zustand des Gehäuses 16 verschließt der Deckel 16b den Behälter 16a. Des Weiteren ist im geschlossenen Zustand des Gehäuses 16 das elastische Element 30 an dem Deckel 16b derart angeordnet, dass das elastische Element 30 den aufgenommenen elektrischen Energiespeicher 13 gegen den Behälter 16a druckbeaufschlägt.

Im Detail ist im offenen Zustand des Gehäuses 16, insbesondere wenn der Deckel 16b von dem Behälter 16b entfernt ist, der elektrische Energiespeicher 13 entlang der Einsetz- und Entnahmerichtung z in den Behälter 16a hinein einsetzbar oder aus dem Behälter 16a heraus entnehmbar.

Außerdem ist das elastische Element 30 mit dem Deckel 16b verbunden, insbesondere stoffschlüssig mittels Verklebung.

Weiter weist die Einrichtung 1 beziehungsweise ihr Gehäuse 16 beziehungsweise ihr Deckel 16b einen Dichtungsring 16c auf. Im geschlossen Zustand des Gehäuses 16 verschließt der Deckel 16b den Behälter 16a mittels des Dichtungsrings 16c fluiddicht.

Zudem weisen der Behälter 16a und der Deckel 16b einen mindestens einen Bajonettverschluss 50 zur mechanischen Verbindung miteinander auf, insbesondere im geschlossenen Zustand des Gehäuses 16. Im gezeigten Ausführungsbeispiel weisen der Behälter 16a und der Deckel 16b drei Bajonettverschlüsse 50 auf. In alternativen Ausführungsbeispielen können der Behälter und der Deckel nur einen einzigen, zwei oder mindestens vier Bajonettverschlüsse aufweisen.

Des Weiteren weist die Einrichtung 1 federnde elektrische Kontaktelemente 14, 15 auf, im gezeigten Ausführungsbeispiel zwei. Die federnden elektrischen Kontaktelemente 14, 15 sind dazu ausgebildet, im geschlossenen Zustand des Gehäuses 16 korrespondierende elektrische Kontakte des aufgenommenen elektrischen Energiespeichers 13 elektrisch zu kontaktieren. Das elastische Element 30 ist von den federnden elektrischen Kontaktelementen 14, 15 verschieden.

Außerdem sind die Kontaktelemente 14, 15 aus dem Gehäuse 16 beziehungsweise seinem Behälter 16a nach außen herausgeführt und dort elektrisch mit korrespondierenden Anschlüssen, insbesondere auf einer Platine 60 der Einrichtung 1, verbunden.

Im Detail ist die Platine 60 an einer Unterseite des Gehäuses 16 beziehungsweise seines Behälters 16a angeordnet. Insbesondere ist die Platine 60 mit dem Behälter 16a mechanisch verbunden.

Im gezeigten Ausführungsbeispiel weist die Platine 60 die Erfassungs- und/oder Auswerteeinrichtung 9, 11, den Betriebsdatenspeicher 6 und die Kommunikationsschnittstelle 7 auf.

Im offenen Zustand des Gehäuses 16, insbesondere wenn der Deckel 16b von dem Behälter 16a entfernt ist, beziehungsweise ohne Energiespeicher 13 ist eine Dicke D des elastischen Elements 30 entlang der Einsetz- und Entnahmerichtung z 3 mm.

Wenn der Energiespeicher 13 in das Gehäuse 16 beziehungsweise seinen Behälter 16a eingesetzt ist, muss zur Schließung des Gehäuses 16 der Deckel 16b auf dem Behälter 16a angeordnet beziehungsweise auf den Behälter 16a aufgesetzt werden. Dann weisen das elastische Element 30 und der aufgenommene Energiespeicher 13 den, insbesondere direkten, Flächenkontakt miteinander auf, insbesondere an einer Unterseite des elastischen Elements 30 beziehungsweise einer Oberseite des Energiespeichers 13. Des Weiteren weisen das Gehäuse 16 beziehungsweise sein Behälter 16a und der aufgenommene Energiespeicher 13 einen, insbesondere direkten, Flächenkontakt miteinander auf, insbesondere an einer der Oberseite gegenüberliegenden beziehungsweise abgewandten Unterseite des Energiespeichers 13.

Des Weiteren muss zur Schließung der Deckel 16b in Richtung des Behälters 16a druckbeaufschlagt beziehungsweise gedrückt werden. Dabei wird das elastische Element 30 durch das Gehäuse 16 beziehungsweise seinen Deckel 16b und seinen Behälter 16a und den Energiespeicher 13 mit der Kraft F entlang der Einsetz- und Entnahmerichtung z zusammengedrückt.

Zusätzlich muss zur mechanischen Verbindung beziehungsweise Schließung des mindestens einen Bajonettverschlusses der Deckel 16b gegenüber dem Behälter 16a um die Einsetz- und Entnahmerichtung z herum gedreht werden.

Im geschlossenen Zustand des Gehäuses 16, insbesondere wenn der Deckel 16b den Behälter 16b verschließt, ist eine Dicke D' des elastischen Elements 30 2 mm beziehungsweise das elastische Element 30 ist um ΔD = 1 mm zusammengedrückt entlang der Einsetz- und Entnahmerichtung z.

Somit ist im geschlossenen Zustand des Gehäuses 16 der aufgenommene Energiespeicher 13, insbesondere an seiner Oberseite und seiner Unterseite, durch Druckbeaufschlagung mit der Kraft F entlang der Einsetz- und Entnahmerichtung z durch das elastische Element 30, insbesondere mittels des Gehäuses 16 beziehungsweise seines Deckels 16b, und das Gehäuse 16 beziehungsweise seinen Behälter 16a fixiert.

Des Weiteren ist im geschlossenen Zustand des Gehäuses 16 der aufgenommene Energiespeicher 13, insbesondere an seiner zwischen der Oberseite und der Unterseite angeordneter beziehungsweise liegender Mantelseite, radial zur Einsetz- und Entnahmerichtung z durch das Gehäuse 16 beziehungsweise seinen Behälter 16a und/oder seinen Deckel 16b gesichert.

Außerdem kontaktieren im geschlossenen Zustand des Gehäuses 16 die federnden elektrischen Kontaktelemente 14, 15 korrespondierende elektrische Kontakte des aufgenommenen Energiespeichers 13 elektrisch. Im Detail kontaktiert das Kontaktelement 14 die Unterseite des Energiespeichers und das Kontaktelement 15 kontaktiert die Mantelseite des Energiespeichers 15.

Weiter ist die Einrichtung 1 getrennt von dem Werkzeug 2 ausgebildet.

Zudem weist die Einrichtung 1 ein dämpfendes Element 40 auf. Bei Anordnung der Einrichtung 1 an dem Werkzeug 2 ist das dämpfende Element 40 zwischen dem Gehäuse 16 und dem Werkzeug 2 angeordnet. Im Detail ist eine Dicke des dämpfenden Elements 40 entlang der Einsetz- und Entnahmerichtung z 1,5 mm.

Im gezeigten Ausführungsbeispiel weist das dämpfende Element 40 einen Schaumstoff auf.

Im Detail weist das dämpfende Element 40 Acrylat auf, insbesondere besteht das dämpfende Element 40 aus Acrylat.

Im gezeigten Ausführungsbeispiel weisen das dämpfende Element 40, insbesondere eine Oberseite des dämpfenden Elements 40, und das Gehäuse 16 beziehungsweise sein Behälter 16a, insbesondere seine Unterseite, und das dämpfende Element 40, insbesondere seine Oberseite, und die Platine 60 jeweils einen, insbesondere direkten, Flächenkontakt miteinander auf.

Im Detail sind das dämpfende Element 40 und das Gehäuse 16 beziehungsweise sein Behälter 16a und das dämpfende Element 40 und die Platine 60 jeweils miteinander verbunden, insbesondere stoffschlüssig mittels Verklebung.

Bei Anordnung der Einrichtung 1 an dem Werkzeug 2 weisen das dämpfende Element 40, insbesondere eine der Oberseite gegenüberliegende beziehungsweise abgewandte Unterseite des dämpfenden Elements 40, und das Werkzeug 2 einen, insbesondere direkten, Flächenkontakt miteinander auf.

Im Detail können das dämpfende Element 40 und das Werkzeug 2 miteinander verbunden sein, insbesondere stoffschlüssig mittels Verklebung.

Im gezeigten Ausführungsbeispiel ist das dämpfende Element 40 als doppelseitiges Klebeband ausgebildet. Wenn eine Schutzfolie von der Unterseite des dämpfenden Elements 40 entfernt wird, kann das dämpfende Element 40 mit dem Werkzeug 2 verklebt werden beziehungsweise an das Werkzeug 2 angeklebt werden.

Zusätzlich weist die Einrichtung 1 beziehungsweise ihr Gehäuse 16 beziehungsweise ihr Behälter 16a mindestens eine Befestigungselementaufnahme 70, 71 für ein Befestigungselement zur Befestigung der Einrichtung 1 an dem Werkzeug 2 auf. Im gezeigten Ausführungsbeispiel weist die Einrichtung 1 vier Befestigungselementaufnahmen 70, 71 auf. In alternativen Ausführungsbeispielen kann die Einrichtung nur eine einzige, zwei, drei oder mindestens fünf Befestigungselementaufnahmen aufweisen. Das mindestens eine Befestigungselement kann eine Schraube, eine Niete oder ein Kabelbinder sein.

Das dämpfende Element weist mindestens eine zu der mindestens einen Befestigungselementaufnahme 70, 71 korrespondierende Befestigungselementdurchführung 72, 73 für das Befestigungselement auf.

Bei Anordnung, insbesondere Befestigung, der Einrichtung 1 an dem Werkzeug 2 mittels der mindestens eine Befestigungselementaufnahme 70, 71 braucht die Einrichtung 1 nicht mittels stoffschlüssiger Verbindung mit dem Werkzeug 2 verbunden zu sein. In anderen Worten: die Schutzfolie braucht nicht von dem dämpfenden Element 40, insbesondere seiner Unterseite, entfernt zu werden.

In alternativen Ausführungsbeispielen kann die Einrichtung entweder zur stoffschlüssigen Verbindung oder zur kraftschlüssigen Verbindung oder zur formschlüssigen Verbindung mit dem Werkzeug ausgebildet sein. Zusätzlich oder alternativ braucht die Einrichtung das dämpfende Element nicht aufzuweisen.

Des Weiteren ist bei Anordnung der Einrichtung 1 an dem Werkzeug 2 die Einsetz- und Entnahmerichtung z nicht parallel, insbesondere senkrecht, zu einer Oberfläche des Werkzeugs 2.

Außerdem ist der Deckel 16b, insbesondere im geschlossenen Zustand des Gehäuses 16, an einer, insbesondere der Unterseite beziehungsweise einer Anbringungsseite gegenüberliegenden beziehungsweise abgewandten, Oberseite des Behälters 16a angeordnet.

Wie die gezeigten und oben erläuterten Ausführungsbeispiele deutlich machen, stellt die Erfindung eine Einrichtung zur Erfassung von Betriebsdaten eines motorangetriebenen Werkzeugs, die zuverlässig ist, insbesondere vibrationssicher beziehungsweise schwingungsbeständig, und ein System mit einer solchen Einrichtung und einem motorangetriebenen Werkzeug bereit.

## Patentansprüche

1. Einrichtung (1) zur Erfassung von Betriebsdaten eines motorangetriebenen Werkzeugs (2), wobei die Einrichtung (1) zur Anordnung an dem Werkzeug (2) ausgebildet ist, wobei die Einrichtung (1) aufweist:
- eine Erfassungs- und/oder Auswerteeinrichtung (9, 11), wobei die Erfassungs- und/oder Auswerteeinrichtung (9, 11) dazu ausgebildet ist, mindestens eine Größe zu erfassen, wobei die Größe von einem Betriebszustand des Werkzeugs (2) abhängig ist, und die erfasste Größe zur Ermittlung der Betriebsdaten auszuwerten und/oder Betriebsdaten zu erfassen,
- einen Betriebsdatenspeicher (6), wobei der Betriebsdatenspeicher (6) dazu ausgebildet ist, die ermittelten und/oder erfassten Betriebsdaten zu speichern,
- eine Kommunikationsschnittstelle (7), wobei die Kommunikationsschnittstelle (7) dazu ausgebildet ist, die gespeicherten Betriebsdaten drahtlos zu einem Endgerät (8) zu übertragen, und
- ein Gehäuse (16),
- wobei das Gehäuse (16) zur Aufnahme eines elektrischen Energiespeichers (13) zur Versorgung der Erfassungs- und/oder Auswerteeinrichtung (9, 11), des Betriebsdatenspeichers (6) und/oder der Kommunikationsschnittstelle (7) mit elektrischer Energie ausgebildet ist,
- wobei das Gehäuse (16) einen offenen Zustand und einen geschlossenen Zustand aufweist,
- wobei im offenen Zustand des Gehäuses (16) der elektrische Energiespeicher (13) entlang einer Einsetz- und Entnahmerichtung (z) in das Gehäuse (16) hinein einsetzbar oder aus dem Gehäuse (16) heraus entnehmbar ist, wobei
- die Einrichtung (1) mindestens ein elastisches Element (30) aufweist, und
- wobei das mindestens eine elastische Element (30) dazu ausgebildet ist, im geschlossenen Zustand des Gehäuses (16) den aufgenommenen elektrischen Energiespeicher (13) durch Druckbeaufschlagung mit einer Kraft (F) entlang der Einsetz- und Entnahmerichtung (z) zu fixieren, wobei die Kraft (F) einen Wert von der Masse (m) des elektrischen Energiespeichers (13) multipliziert mit minimal 1 N pro g aufweist.

2. Einrichtung (1) nach Anspruch 1, wobei die Einrichtung (1) aufweist:
- einen elektrischen Energiespeicher (13).

3. Einrichtung (1) nach einem der vorhergehenden Ansprüche,
- wobei die Kraft (F) einen Wert von minimal 3 N aufweist, insbesondere von minimal 7,5 N, insbesondere von minimal 15 N, insbesondere von minimal 30 N, insbesondere von minimal 45 N, insbesondere von minimal 60 N, insbesondere von minimal 75 N, insbesondere von minimal 90 N.

4. Einrichtung (1) nach einem der vorhergehenden Ansprüche,
- wobei das elastische Element (30) dazu ausgebildet ist, im geschlossenen Zustand des Gehäuses (16) den aufgenommenen elektrischen Energiespeicher (13) mittels eines Flächenkontakts zu fixieren.

5. Einrichtung (1) nach einem der vorhergehenden Ansprüche,
- wobei das elastische Element (30) einen Schaumstoff aufweist, insbesondere ein Schaumstoff ist.

6. Einrichtung (1) nach einem der vorhergehenden Ansprüche,
- wobei das elastische Element (30) Polyurethane aufweist, insbesondere aus Polyurethane besteht.

7. Einrichtung (1) nach einem der vorhergehenden Ansprüche,
- wobei das Gehäuse (16) dazu ausgebildet ist, im geschlossenen Zustand des Gehäuses (16) den aufgenommenen elektrischen Energiespeicher (13) radial zur Einsetz- und Entnahmerichtung (z) zu sichern.

8. Einrichtung (1) nach einem der vorhergehenden Ansprüche,
- wobei das Gehäuse (16) einen Behälter (16a) zur Aufnahme des elektrischen Energiespeichers (13) und einen Deckel (16b) zum Verschluss des Behälters (16a) aufweist,
- wobei im offenen Zustand des Gehäuses (16) der Deckel (16b) von dem Behälter (16a) entfernt ist und im geschlossen Zustand des Gehäuses (16) der Deckel (16b) den Behälter (16a) verschließt, und
- wobei im geschlossenen Zustand des Gehäuses (16) das elastische Element (30) an dem Deckel (16b) derart angeordnet ist, dass das elastische Element (30) den aufgenommenen elektrischen Energiespeicher (13) gegen den Behälter (16a) druckbeaufschlägt.

9. Einrichtung (1) nach Anspruch 8,
- wobei der Behälter (16a) und der Deckel (16b) mindestens einen Bajonettverschluss (50) zur mechanischen Verbindung miteinander aufweisen.

10. Einrichtung (1) nach einem der vorhergehenden Ansprüche,
- wobei die Einrichtung (1) getrennt von dem Werkzeug (2) ausgebildet ist.

11. Einrichtung (1) nach einem der vorhergehenden Ansprüche, wobei die Einrichtung (1) aufweist:
- ein dämpfendes Element (40), wobei bei Anordnung der Einrichtung (1) an dem Werkzeug (2) das dämpfende Element (40) zwischen dem Gehäuse (16) und dem Werkzeug (2) angeordnet ist.

12. Einrichtung (1) nach Anspruch 11,
- wobei das dämpfende Element (40) Acrylat aufweist, insbesondere aus Acrylat besteht.

13. Einrichtung (1) nach einem der vorhergehenden Ansprüche, wobei die Einrichtung (1) aufweist,
- federnde elektrische Kontaktelemente (14, 15), wobei die federnden elektrischen Kontaktelemente (14, 15) dazu ausgebildet sind, im geschlossenen Zustand des Gehäuses (16) korrespondierende elektrische Kontakte des aufgenommenen elektrischen Energiespeichers (13) elektrisch zu kontaktieren,
- wobei das elastische Element (30) von den federnden elektrischen Kontaktelementen (14, 15) verschieden ist.

14. System (12), wobei das System (12) aufweist:
- eine Einrichtung (1) nach einem der vorhergehenden Ansprüche, und
- ein motorangetriebenes Werkzeug (2).

15. System (12) nach Anspruch 14,
- wobei das motorangetriebene Werkzeug (2) eine Säge, oder ein Hoch-Entaster, oder eine Heckenschere, oder ein Heckenschneider, oder ein Laubbläser, oder ein Laubsauger, oder eine Kehrwalze, oder eine Kehrbürste, oder ein Rasenmäher, oder ein Freischneider, oder ein Vertikutierer ist.

## Claims

1. Device (1) for identifying operating data of a motor-driven tool (2), wherein the device (1) is configured for arrangement on the tool (2), the device (1) comprising:
- an identifying and/or evaluating device (9, 11), wherein the identifying and/or evaluating device (9, 11) is configured to identify at least one parameter, wherein the parameter is a function of an operating state of the tool (2), and to evaluate the identified parameter for obtaining the operating data and/or to identify operating data,
- an operating data memory unit (6), wherein the operating data memory unit (6) is configured to store the obtained and/or identified operating data,
- a communication interface (7), wherein the communication interface (7) is configured to transfer the stored operating data to a terminal (8) in a wire-less manner, and
- a housing (16),
- wherein the housing (16) is configured to accommodate an electrical energy storage device (13) for electrical energy supply of the identifying and/or evaluating device (9, 11), the operating data memory unit (6), and/or the communication interface (7),
- wherein the housing (16) has an open condition and a closed condition,
- wherein, in the open condition of the housing (16), the electrical energy storage device (13) is insertable into the housing (16) or removable from the housing (16) along an insertion and removal direction (z),
- wherein the device (1) has at least one elastic element (30), and
- wherein the at least one elastic element (30) is configured, in the closed condition of the housing (16), to fix the accommodated electrical energy storage device (13) by applying pressure of a force (F) along the insertion and removal direction (z), wherein the force (F) amounts to a value of the mass (m) of the electrical energy storage device (13) multiplied by at minimum 1 N per g.

2. Device (1) according to claim 1, the device (1) comprising:
- an electrical energy storage device (13).

3. Device (1) according to any of the preceding claims,
- wherein the force (F) amounts to a value of at minimum 3 N, in particular of at minimum 7.5 N, in particular of at minimum 15 N, in particular of at minimum 30 N, in particular of at minimum 45 N, in particular of at minimum 60 N, in particular of at minimum 75 N, in particular of at minimum 90 N.

4. Device (1) according to any of the preceding claims,
- wherein the elastic element (30) is configured, in the closed condition of the housing (16), to fix the accommodated electrical energy storage device (13) by means of flat contact.

5. Device (1) according to any of the preceding claims,
- wherein the elastic element (30) includes a foam material, in particular is a foam material.

6. Device (1) according to any of the preceding claims,
- wherein the elastic element (30) includes polyurethanes, in particular is made of polyurethanes.

7. Device (1) according to any of the preceding claims,
- wherein the housing (16) is configured, in the closed condition of the housing (16), to secure the accommodated electrical energy storage device (13) radially in relation to the insertion and removal direction (z).

8. Device (1) according to any of the preceding claims,
- wherein the housing (16) includes a container (16a) for accommodation of the electrical energy storage device (13) and a cover (16b) for closing the container (16a),
- wherein, in the open condition of the housing (16), the cover (16b) is removed from the container (16a) and, in the closed condition of the housing (16), the cover (16b) seals the container (16a), and
- wherein, in the closed condition of the housing (16), the elastic element (30) is disposed on the cover (16b) such that the elastic element (30) applies a pressure on the accommodated electrical energy storage device (13) against the container (16a).

9. Device (1) according to claim 8,
- wherein the container (16a) and the cover (16b) include at least one bayonet fitting (50) for mechanical connection to each other.

10. Device (1) according to any of the preceding claims,
- wherein the device (1) is embodied separate from the tool (2).

11. Device (1) according to any of the preceding claims, the device (1) comprising:
- a damping element (40), wherein upon arrangement of the device (1) on the tool (2), the damping element (40) is disposed between the housing (16) and the tool (2).

12. Device (1) according to claim 11,
- wherein the damping element (40) includes acrylate, in particular is made of acrylate.

13. Device (1) according to any of the preceding claims, the device (1) comprising:
- resilient electrical contact elements (14, 15), wherein the resilient electrical contact elements (14, 15) are configured, in the closed condition of the housing (16), to electrically contact corresponding electrical contacts of the accommodated electrical energy storage device (13),
- wherein the elastic element (30) is different from the resilient electrical contact elements (14, 15).

14. System (12), the system (12) comprising:
- a device (1) according to any of the preceding claims, and
- a motor-driven tool (2).

15. System (12) according to claim 14,
- wherein the motor-driven tool (2) is a saw, or a pole-pruner, or hedge shears, or a hedge cutter, or a leaf blower, or a leaf aspirator, or a sweeper roller, or a sweeper brush, or a lawn mower, or a brush cutter, or a dethatcher.

## Revendications

1. Dispositif (1) d'acquisition de données de fonctionnement d'un outil (2) entraîné par un moteur, le dispositif (1) étant conçu pour être disposé au niveau de l'outil (2), le dispositif (1) comportant :
- un dispositif de détection et/ou d'évaluation (9, 11), le dispositif de détection et/ou d'évaluation (9, 11) étant conçu pour détecter au moins une grandeur, la grandeur étant fonction d'un état de fonctionnement de l'outil (2), et pour évaluer la grandeur détectée pour déterminer les données de fonctionnement et/ou pour acquérir des données de fonctionnement,
- une mémoire de données de fonctionnement (6), la mémoire de données de fonctionnement (6) étant conçue pour mémoriser les données de fonctionnement déterminées et/ou acquises,
- une interface de communication (7), l'interface de communication (7) étant conçue pour transmettre sans fil les données de fonctionnement mémorisées à un terminal (8), et
- un boîtier (16),
- le boîtier (16) étant destiné à recevoir un accumulateur d'énergie électrique (13) destiné à alimenter en énergie électrique le dispositif de détection et/ou d'évaluation (9, 11), la mémoire de données de fonctionnement (6) et/ou l'interface de communication (7),
- le boîtier (16) présentant un état ouvert et un état fermé,
- lorsque le boîtier (16) est ouvert, l'accumulateur d'énergie électrique (13) pouvant être inséré dans le boîtier (16) ou retiré du boîtier (16) suivant une direction d'insertion et de retrait (z),
- le dispositif (1) comportant au moins un élément élastique (30), et
- l'au moins un élément élastique (30) étant conçu pour fixer l'accumulateur d'énergie électrique (13) reçu, lorsque le boîtier (16) est fermé, en appliquant une pression avec une force (F) suivant la direction d'insertion et de retrait (z), la force (F) ayant une valeur égale à la masse (m) de l'accumulateur d'énergie électrique (13) multipliée par 1 N par g minimum.

2. Dispositif (1) selon la revendication 1, le dispositif (1) comprenant : un accumulateur d'énergie électrique (13).

3. Dispositif (1) selon l'une des revendications précédentes,
- la force (F) ayant une valeur d'au moins 3 N, en particulier de 7,5 N minimum, en particulier de 15 N minimum, en particulier de 30 N minimum, en particulier de 45 N minimum, notamment de 60 N minimum, en particulier de 75 N minimum, notamment de 90 N minimum.

4. Dispositif (1) selon l'une des revendications précédentes,
- l'élément élastique (30) étant conçu pour fixer l'accumulateur d'énergie électrique reçu (13) au moyen d'un contact surfacique lorsque le boîtier (16) est fermé.

5. Dispositif (1) selon l'une des revendications précédentes,
- l'élément élastique (30) comportant une mousse, en particulier étant une mousse.

6. Dispositif (1) selon l'une des revendications précédentes,
- l'élément élastique (30) comprenant des polyuréthanes, en particulier étant en polyuréthanes.

7. Dispositif (1) selon l'une des revendications précédentes,
- le boîtier (16) étant conçu pour fixer l'accumulateur d'énergie électrique reçu (13) radialement à la direction d'insertion et de retrait (z) lorsque le boîtier (16) est fermé.

8. Dispositif (1) selon l'une des revendications précédentes,
- le boîtier (16) comportant un récipient (16a) destiné à recevoir l'accumulateur d'énergie électrique (13) et un couvercle (16b) destiné à fermer le récipient (16a),
- lorsque le boîtier (16) est ouvert, le couvercle (16b) étant retiré du récipient (16a) et, lorsque le boîtier (16) est fermé, le couvercle (16b) fermant le récipient (16a), et
- lorsque le boîtier (16) est fermé, l'élément élastique (30) étant disposé sur le couvercle (16b) de telle manière que l'élément élastique (30) presse l'accumulateur d'énergie électrique (13) contre le récipient (16a).

9. Dispositif (1) selon la revendication 8,
- le récipient (16a) et le couvercle (16b) comportant au moins une fermeture à baïonnette (50) destinée à les relier mécaniquement l'un à l'autre.

10. Dispositif (1) selon l'une des revendications précédentes,
- le dispositif (1) étant conçu séparément de l'outil (2) .

11. Dispositif (1) selon l'une des revendications précédentes, le dispositif (1) comprenant :
- un élément amortisseur (40), l'élément amortisseur (40) étant disposé entre le boîtier (16) et l'outil (2) lorsque le dispositif (1) est disposé sur l'outil (2).

12. Dispositif (1) selon la revendication 11,
- l'élément amortisseur (40) comprenant de l'acrylate, en particulier étant en acrylate.

13. Dispositif (1) selon l'une des revendications précédentes, le dispositif (1) comportant
- des éléments de contact électrique élastiques (14, 15), les éléments de contact électrique élastiques (14, 15) étant conçus pour établir un contact électrique avec des contacts électriques correspondants de l'accumulateur d'énergie électrique reçu (13) lorsque le boîtier (16) est fermé,
- l'élément élastique (30) étant différent des éléments de contact électrique élastiques (14, 15).

14. Système (12), le système (12) comprenant :
- un dispositif (1) selon l'une des revendications précédentes, et
- un outil (2) entraîné par moteur.

15. Système (12) selon la revendication 14,
- l'outil (2) entraîné par moteur étant une scie, ou un sécateur, ou une cisaille à haie, ou un taille-haie, ou un souffleur de feuilles, ou un aspirateur de feuilles, ou un balai rouleau, ou une brosse rotative, ou une tondeuse à gazon, ou une débroussailleuse, ou un scarificateur.
